# EUROPEAN PATENT APPLICATION

(11) **EP 2 680 484 A2**
(43) Date of publication of application: **01.01.2014**
(21) Application number: 13172410.6
(22) Date of filing: 18.06.2013
(51) Int. Cl.: H04L 5/00

(54) **Transmitter and receiver and identification pattern transmission method and identification pattern detection method**

(30) Priority: 29.06.2012 US 201261665901 P; 03.05.2013 TW 102115931
(71) Applicant: Industrial Technology Research Institute, Chutung Hsinchu 31040 (TW)
(72) Inventor: Sheu, Chorng-Ren, 807 Kaohsiung City (TW); Wang, Hung-Hsiang, 310 Hsinchu County (TW); Huang, Chuan-Yuan, 852 Kaohsiung City (TW)
(74) Representative: Becker Kurig Straus

(57) **Abstract**

A transmitter and an identification pattern transmission method thereof and a receiver and an identification pattern detection method thereof are provided. The transmitter includes a random sequence generator, a mapper and a resource allocation unit. The identification pattern transmission method includes following steps. A random sequence is generated. The random sequence is mapped to an identification pattern. The identification pattern is partitioned into a plurality of identification segments. The identification segments are allocated to a plurality of communication resource blocks to generate a transmitted signal having information of the identification pattern, where each of the communication resource blocks is spaced from another adjacent communication resource block by a predetermined number of symbols and/or a predetermined number of subcarriers.

## Description

### CROSS-REFERENCE TO RELATED APPLICATION

This application claims the priority benefits of U.S. provisional application serial no. 61/665,901, filed on June 29, 2012 and Taiwan application serial no. 102115931, filed on May 3, 2013.

### TECHNICAL FIELD

The disclosure relates to a transmitter and an identification pattern transmission method thereof and a receiver and an identification pattern detection method thereof.

### BACKGROUND

Generally, in case of device-to-device communication of non-central based devices, various mobile devices are required to perform a peer discovery operation before establishing a direct communication link with each other, so as to find an empty resource from communication resources for transmitting an identification (ID) pattern. The empty resource is, for example, a resource block, a resource element or any similar spectrum resource, etc. without carrying the ID pattern of any mobile device. After the empty resource is found, the mobile device sends its own ID pattern by using the empty resource.

However, since the communication resources will encounter a communication channel with an attenuation characteristic, when the communication resources used for transmitting the ID pattern are allocated, if a suitable resource allocation operation is not performed, a receiver probably cannot correctly detect the ID pattern due to attenuation thereof during the transmission.

### SUMMARY

The disclosure provides a transmitter, which is adapted to transmit an ID pattern used for device-to-device communication. The transmitter includes a random sequence generator, a mapper and a resource allocation unit. The random sequence generator generates a random sequence. The mapper is coupled to the random sequence generator, and maps the random sequence to the ID pattern. The resource allocation unit is coupled to the mapper, and partitions the ID pattern into a plurality of ID segments, and allocates the ID segments to a plurality of communication resource blocks to generate a transmitted signal having information of the ID pattern, where each of the communication resource blocks is spaced from another adjacent communication resource block by a predetermined number of symbols and/or a predetermined number of subcarriers.

The disclosure provides an ID pattern transmission method, which is adapted to a transmitter for device-to-device communication. The ID pattern transmission method includes the following steps. A random sequence is generated. The random sequence is mapped to an ID pattern. The ID pattern is partitioned into a plurality of ID segments. The ID segments are allocated to a plurality of communication resource blocks to generate a transmitted signal having information of the ID pattern, where each of the communication resource blocks is spaced from another adjacent communication resource block by a predetermined number of symbols and/or a predetermined number of subcarriers.

The disclosure provides a receiver, which is adapted to detect an ID pattern used for device-to-device communication. The receiver includes a signal extractor, a conjugate delay module, a multiplication unit, a matching unit, a normalization unit and a decision unit. The signal extractor extracts a plurality of communication resource blocks corresponding to a plurality of ID segments of the ID pattern from a received signal having information of the ID pattern, so as to generate an ID pattern received signal. The conjugate delay module is coupled to the signal extractor, and individually delays the ID pattern received signal for a symbol time, and performs a complex conjugate processing on the delayed ID pattern received signal to generate a conjugated delayed received signal of the ID pattern. The multiplication unit is coupled to the signal extractor and the conjugate delay module, and multiplies the ID pattern received signal with the conjugated delayed received signal of the ID pattern to generate a conjugated delayed multiplied received signal of the ID pattern. The matching unit is coupled to the multiplication unit and a predetermined signal, where the predetermined signal is obtained after the ID pattern is processed with a conjugate delay multiplication processing. The matching unit performs a matching processing on the conjugated delayed multiplied received signal of the ID pattern and the predetermined signal, so as to generate a differential matching value. The normalization unit is coupled to the matching unit and the signal extractor, and performs a normalization processing on the differential matching value according to an average power of the ID pattern received signal to generate a normalized differential matching value. The decision unit is coupled to the normalization unit, and determines whether the normalized differential matching value is greater than a predetermined threshold value. If yes, the decision unit outputs a decision result to determine that the ID pattern is detected, and if not, the decision unit outputs the decision result to determine that the ID pattern is not detected.

The disclosure provides an ID pattern detection method, which is adapted to a receiver for device-to-device communication. The ID pattern detection method includes the following steps. A plurality of communication resource blocks corresponding to a plurality of ID segments of the ID pattern are extracted from a received signal having information of the ID pattern, so as to generate an ID pattern received signal. The ID pattern received signal is individually delayed for a symbol time, and a complex conjugate processing is performed on the delayed ID pattern received signal to generate a conjugated delayed received signal of the ID pattern. The ID pattern received signal is multiplied with the conjugated delayed received signal of the ID pattern to generate a conjugated delayed multiplied received signal of the ID pattern. A matching processing is performed on the conjugated delayed multiplied received signal of the ID pattern and a predetermined signal corresponding to the ID pattern performed with a conjugate delay multiplication processing, so as to generate a differential matching value. A normalization processing is performed on the differential matching value according to an average power of the ID pattern received signal to generate a normalized differential matching value. It is determined whether the normalized differential matching value is greater than a predetermined threshold value. If yes, a decision result is output to determine that the ID pattern is detected, and if not, the decision result is output to determine that the ID pattern is not detected.

Several exemplary embodiments accompanied with figures are described in detail below to further describe the disclosure in details.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

FIG. 1 is a schematic diagram of a transmitter according to an embodiment of the disclosure.

FIG. 2A is a schematic diagram of communication resource allocation according to an embodiment of the disclosure.

FIG. 2B is a schematic diagram of communication resource allocation according to the embodiment of FIG. 2A.

FIG. 3A is a schematic diagram of communication resource allocation according to an embodiment of the disclosure.

FIG. 3B is a schematic diagram of communication resource allocation according to the embodiment of FIG. 3A.

FIG. 4A is a schematic diagram of communication resource allocation according to an embodiment of the disclosure.

FIG. 4B is a schematic diagram of communication resource allocation according to the embodiment of FIG. 4A.

FIG. 5 is a flowchart illustrating an ID pattern transmission method according to an embodiment of the disclosure.

FIG. 6 is a schematic diagram of a receiver according to an embodiment of the disclosure.

FIG. 7 is a flowchart illustrating an ID pattern detection method according to an embodiment of the disclosure.

### DETAILED DESCRIPTION OF DISCLOSED EMBODIMENTS

Reference will now be made in detail to one of exemplary embodiments of the disclosure, examples of which are illustrated in the accompanying drawings. Wherever possible, the same reference numbers are used in the drawings and the description to refer to the same or like parts.

According to an ID pattern transmission method and a transmitter using the same of the disclosure, the transmitter allocates communication resources used for transmitting an ID pattern, communication resource blocks may not encounter similarly severe fading channels, and the accuracy of the ID pattern detection in the receiver may be improved. In the following embodiments, an orthogonal frequency division multiplexing (OFDM) system is taken as a system model for describing the spirit of the disclosure. However, the concept of the disclosure can also be applied to communication systems implemented by other configurations, and is not limited to the OFDM system.

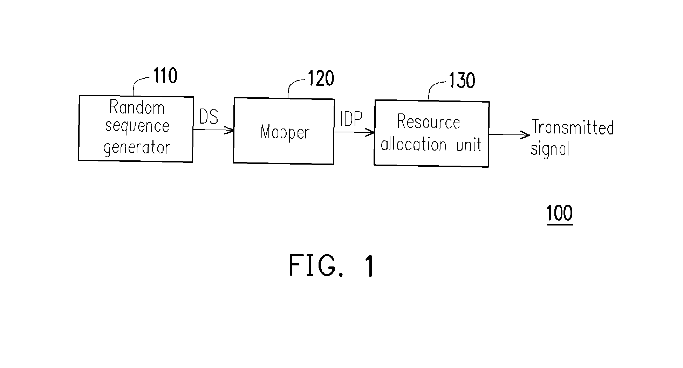

FIG. 1 is a schematic diagram of a transmitter according to an embodiment of the disclosure. In the present embodiment, the transmitter 100 includes a random sequence generator 110, a mapper 120 and a resource allocation unit 130. The random sequence generator 110 can generate a random sequence DS. The random sequence DS is, for example, digital data related to ID information of the transmitter 100, though the disclosure is not limited thereto. The mapper 120 is coupled to the random sequence generator 110. The mapper 120 maps the random sequence DS to an ID pattern IDP. The ID pattern IDP is allocated on a frequency domain of the OFDM system, and may include a plurality of OFDM symbols on a plurality of subcarriers. For simplicity's purpose, a parameter L is used to represent the number of the OFDM symbols in the ID pattern IDP, where L is a positive integer.

The resource allocation unit 130 is coupled to the mapper 120. For example, the resource allocation unit 130 can be a peer discovery frame generator (not shown) configured in the transmitter 100 for generating a peer discovery frame. The resource allocation unit 130 can partition the ID pattern IDP into a plurality of ID segments. In detail, when the resource allocation unit 130 partitions the ID pattern IDP into S (which is a positive integer greater than or equal to 1) ID segments, where an i^{th} (i is a positive integer between 1 and S) ID segment, for example, includes Lᵢ (which is a positive integer not less than 2) successive OFDM symbols on a single subcarrier in the frequency domain. Since the number (i.e. L) of the OFDM symbols in the ID pattern IDP is a sum of the OFDM symbols of S ID segments, L can be represented as L=L₁+L₂...+L_{S}. Then, the resource allocation unit 130 can allocate the ID segments to a plurality of communication resource blocks to generate a frequency domain transmitted signal (i.e. a frequency domain transmitted signal of the peer discovery frame) having information of the ID pattern. Details of allocating the communication resources by the resource allocation unit 130 are described below with reference of figures.

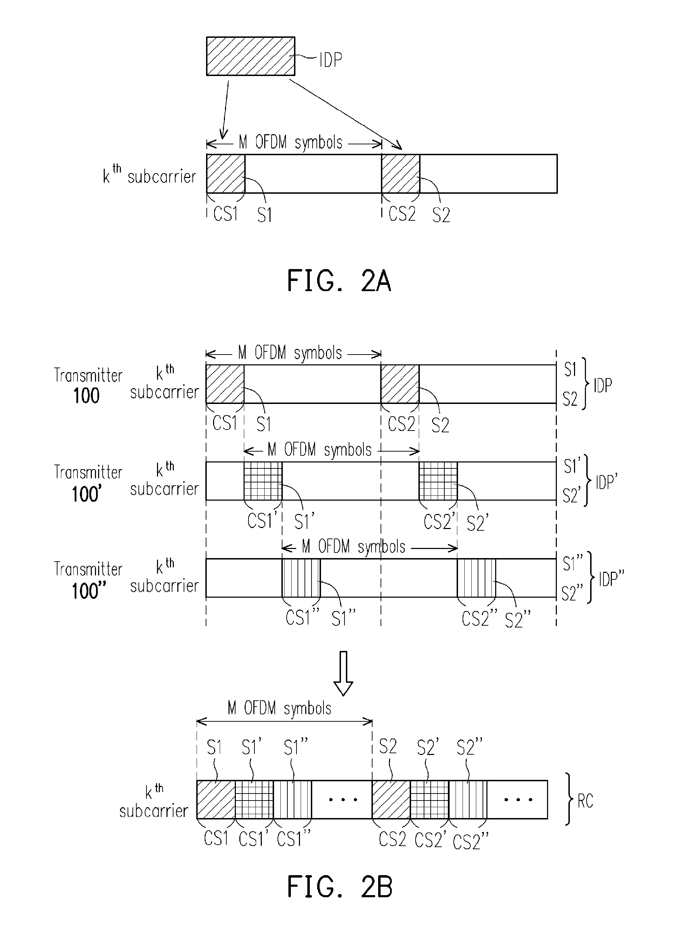

FIG. 2A is a schematic diagram of communication resource allocation according to an embodiment of the disclosure. In the present embodiment, it is assumed that the ID pattern IDP is partitioned into 2 (i.e. S=2) ID segments S1 and S2 by the resource allocation unit 130 of FIG. 1. The ID segments S1 and S2 respectively include L/2 successive OFDM symbols on a single subcarrier in the frequency domain (assuming L/2 is a positive integer). Then, the resource allocation unit 130 allocates a communication resource block CS1 on a k^{th} subcarrier to transmit the ID segment S1, and allocates a communication resource block CS2 on the k^{th} subcarrier to transmit the ID segment S2. The adjacent communication resource blocks CS1 and CS2 are spaced by a predetermined number of symbols (which is represented by M, where M is a positive integer). Then, the resource allocation unit 130 transmits the ID segments S1 and S2 to, for example, an inverse fast Fourier transformer (IFFT) (not shown) to transform the frequency domain OFDM symbols (i.e. the OFDM symbols included in the ID segments S1 and S2) into corresponding time domain signals according to the resource allocation method of FIG. 2A, and transmits the time domain signals to a communication channel through, for example, an antenna (not shown) for device-to-device communication.

A general communication channel may have a characteristic of fading channel due to influence of environmental factors (for example, a Doppler effect and/or multi-path transmission). By spacing the transmitted communication resource blocks by the predetermined number of symbols, a time diversity gain may be obtained for the ID segments. In detail, since the communication resource blocks CS1 and CS2 are spaced by the predetermined number (i.e. M) of symbols, when the communication resource block CS1 of the ID segment S1 encounters a severe fading channel, a probability that the communication resource block CS2 of the ID segment S2 encounters the similarly severe fading channel is greatly decreased. In this way, when a receiver (not shown) receives the ID segments S1 and S2 according to the communication resource blocks CS1 and CS2, a situation that the receiver cannot correctly detect the ID pattern IDP due to that both the ID segments S1 and S2 encounter severe fading is less likely to occur.

In view of the receiver, if the receiver cannot correctly detect the ID pattern IDP (i.e. has a detection error) due to that both the ID segments S1 and S2 encounter severe fading, the receiver may misjudge that the communication resource blocks CS1 and CS2 used for transmitting the ID pattern IDP belong to the aforementioned empty resources. Hence, the receiver may notify the transmitter in the same communication device to transmit the ID pattern of the communication device through the communication resource blocks CS1 and CS2. Then, if the other transmitter had been transmitted the ID pattern of the other communication device through the communication resource blocks CS1 and CS2, it may cause severe interference on the transmission of the ID pattern IDP. Therefore, the improvement of the accuracy of the ID pattern IDP detection may alleviate the situation of severe interference occurred on the transmission of the ID pattern.

Moreover, the resource allocation unit 130 may set the predetermined number of symbols according to a Doppler frequency and a useful symbol duration related to the communication channel to have a better time diversity gain. The useful symbol duration is, for example, a reciprocal of a subcarrier spacing in the OFDM system. In detail, a relationship between the predetermined number (i.e. M) of symbols, the Doppler frequency and the useful symbol duration satisfies M>0.5/(f_{d}×T_{U}), where f_{d} is the Doppler frequency (with a unit of Hz), T_{U} is the useful symbol duration (with a unit of second). In detail, f_{d}×T_{U} represents a proportion that each useful symbol duration occupies an average fading cycle of channel. When M×(f_{d}×T_{U}) is greater than 0.5, it represents that the spacing (i.e. the predetermined number (M) of symbols) between the adjacent communication resource blocks CS1 and CS2 is greater than a half average fading cycle of the channel. Therefore, when the ID segments S1 and S2 are transmitted through the communication resource blocks CS1 and CS2, it is less likely to have similarly severe fading for both the ID segments S1 and S2. Along with increase of the spacing between the communication resource blocks CS1 and CS2, a better time diversity gain could be obtained in principle.

FIG. 2B is a schematic diagram of communication resource allocation according to the embodiment of FIG. 2A. In the present embodiment, it is assumed that three transmitters 100, 100' and 100" are about to transmit their own ID patterns IDP, IDP' and IDP". Now, the transmitters 100, 100' and 100" can respectively partition the ID patterns IDP, IDP' and IDP" into the corresponding ID segments according to the method described in the embodiment of FIG. 1 and FIG. 2A. A mechanism that the transmitter 100 partitions the ID pattern IDP can refer to related description of the embodiment of FIG. 2A, which is not repeated. The transmitter 100' partitions the ID pattern IDP' into ID segments S1' and S2', and the transmitter 100" partitions the ID pattern IDP" into ID segments S1" and S2". Moreover, the resource allocation units (not shown) included in the transmitters 100, 100' and 100" can also allocate the two corresponding ID segments to the two corresponding communication resource blocks, and merge to generate a transmitted signal having information of the ID pattern.

Taking the transmitter 100' as an example, the resource allocation unit thereof (not shown) allocates the communication resource block CS1' on the k^{th} subcarrier to transmit the ID segment S1', and allocates the communication resource block CS2' on the k^{th} subcarrier to transmit the ID segment S2'. The communication recourse blocks CS1' and CS2' are also spaced by the predetermined number (M) of symbols. Taking the transmitter 100" as an example, the resource allocation unit thereof (not shown) allocates the communication resource block CS1" on the k^{th} subcarrier to transmit the ID segment S1", and allocates the communication resource block CS2" on the k^{th} subcarrier to transmit the ID segment S2". The communication recourse blocks CS1" and CS2" are also spaced by the predetermined number (M) of symbols. In other embodiments, before the transmitters 100, 100' and 100" individually perform the resource allocation operation, the transmitters 100, 100' and 100" can perform a synchronization operation to ensure that the individually allocated communication resource blocks are not mutually interfered.

After the transmitters 100, 100' and 100" individually finish the resource allocation, the ID segments can be transmitted through the allocated communication resource blocks. Therefore, regarding the k^{th} subcarrier, the ID segments carried by the k^{th} subcarrier at different time are shown as a resource configuration RC, though the disclosure is not limited thereto. When the transmitters 100, 100' and 100" allocate the communication resource blocks through configurations different to that shown in FIG. 2B, a resource configuration different to the resource configuration RC is formed.

In FIG. 2A and FIG. 2B, although the ID pattern IDP partitioned into two ID segments S1 and S2 (i.e. S=2) is taken as an example for descriptions, in other embodiments, the ID pattern IDP can also be partitioned into other number of ID segments (for example, S is 3, 4, 5, 6 or other positive integers). In this case, the resource allocation unit 130 also allocates the communication resource blocks used for transmitting the ID segments according to instructions of the aforementioned embodiment. Namely, the resource allocation unit 130 can periodically and sequentially send the ID segments while taking the predetermined symbol number as a period, though the disclosure is not limited thereto.

In other embodiments, in order to further increase the diversity gain of the disclosure, when the transmitter allocates the communication resource blocks, each of the communication resource blocks can be spaced from another adjacent communication resource block by a predetermined number (represented by Q, and Q is a positive integer) of subcarriers.

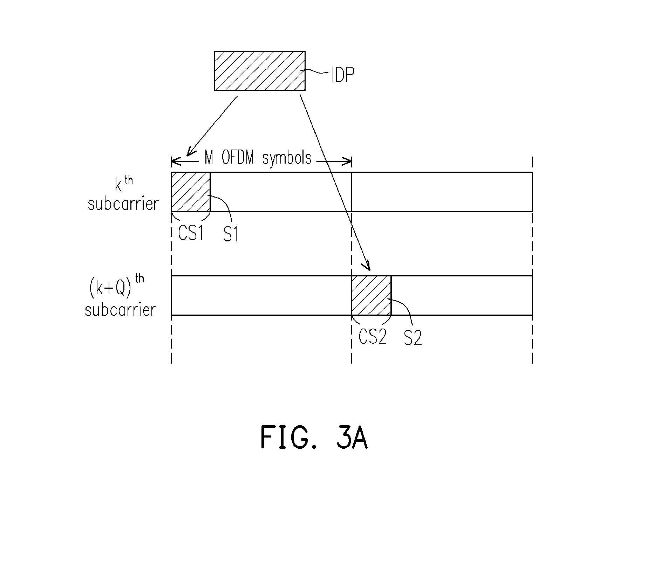

FIG. 3A is a schematic diagram of communication resource allocation according to an embodiment of the disclosure. In the present embodiment, it is assumed that the ID pattern IDP is partitioned into two (i.e. S=2) ID segments S1 and S2 by the resource allocation unit 130 of FIG. 1. The ID segments S1 and S2 respectively include L/2 (it is assumed that L/2 is a positive integer) successive OFDM symbols on a single subcarrier in the frequency domain. Then, the resource allocation unit 130 allocates the communication resource block CS1 on the k^{th} subcarrier to transmit the ID segment S1, and allocates the communication resource block CS2 on the (k+Q)^{th} subcarrier to transmit the ID segment S2. As that shown in FIG. 3A, besides that the communication resource blocks CS1 and CS2 are spaced by the predetermined number of symbols (which is represented by M), the communication resource blocks are further spaced by a predetermined number (Q) of subcarriers.

According to the aforementioned instructions, when the communication resource blocks CS1 and CS2 are spaced by the predetermined number (M) of symbols, the time diversity gain can be obtained when the ID segments S1 and S2 are transmitted. Moreover, since the communication resource blocks CS1 and CS2 of FIG. 3A are further spaced by the predetermined number (Q) of subcarriers, a frequency diversity gain can be further obtained when the ID segments S1 and S2 are transmitted. In this way, when the receiver receives the ID segments S1 and S2 according to the communication resource blocks CS1 and CS2, a situation that the receiver cannot correctly detect the ID pattern IDP due to that both the ID segments S1 and S2 encounter similarly severe fading is less likely to occur in principle.

Moreover, the resource allocation unit 130 may set the predetermined number (M) of symbols according to a Doppler frequency and a useful symbol duration related to the communication channel to have a better time diversity gain. Related setting details of the predetermined number (M) of symbols can refer to related descriptions of the embodiment of FIG. 2A, which are not repeated. Moreover, the resource allocation unit 130 may set the predetermined number (Q) of subcarriers according to a useful symbol duration (T_{U}) and a maximum multi-path delay time related to the communication channel to have a better frequency diversity gain. The maximum multi-path delay time (which is represented by τₘₐₓ, with a unit of second) is, for example, the maximum delay time in the communication channel when the communication channel is a multi-path channel. In detail, a relationship between the predetermined number (Q) of subcarriers, the useful symbol duration (T_{U}) and the maximum multi-path delay time τₘₐₓ satisfies Q>T_{U}/τₘₐₓ. In detail, 1/τₘₐₓ represents a coherent bandwidth of the communication channel, and when a spacing of Q subcarriers (one subcarrier spacing is 1/T_{U}) is greater than one coherent bandwidth (i.e., Q×1/T_{U}>1/τₘₐₓ), it represents that the spacing between the adjacent communication resource blocks CS1 and CS2 is greater than one coherent bandwidth. Therefore, when the ID segments S1 and S2 are transmitted through the communication resource blocks CS1 and CS2, the individual channel frequency responses are almost mutually independent. In other words, in case that the communication resource blocks CS1 and CS2 are further spaced by the predetermined number of subcarriers, a better frequency diversity gain could be obtained.

In other embodiment, since a general communication standard may set a guard interval, and the length of the guard interval (which is represented by T_{GI}) is required to be greater than the maximum multi-path delay time (τₘₐₓ), the predetermined number (Q) of subcarriers can be set according to the length of the guard interval (T_{GI}), so as could obtain a better frequency diversity gain. For example, when the length of the guard interval is 1/8 of the useful symbol duration (T_{U}), the corresponding predetermined number of subcarriers is greater than 8 (as τₘₐₓ<T_{GI}=1/8 T_{U}), though the disclosure is not limited thereto.

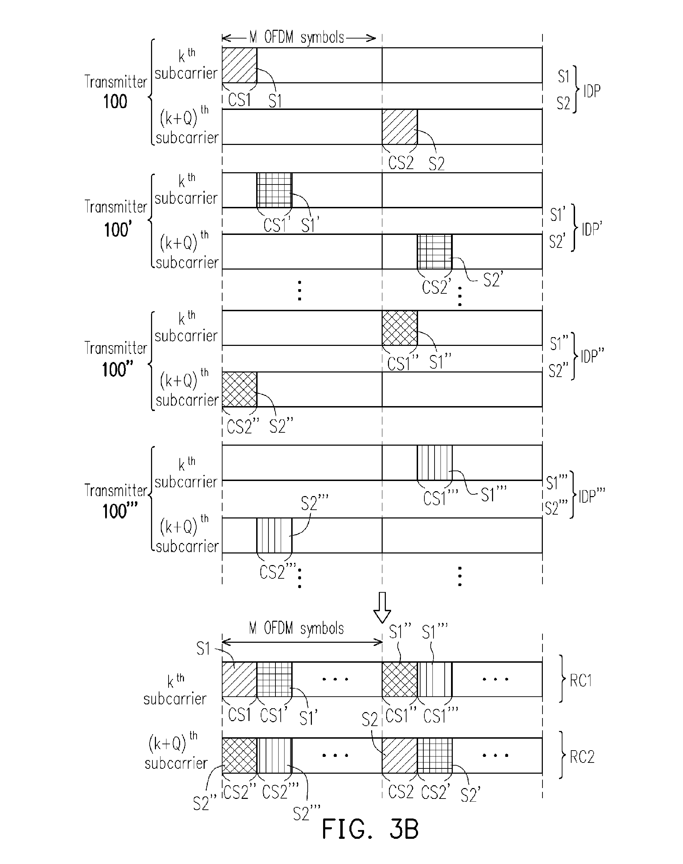

FIG. 3B is a schematic diagram of communication resource allocation according to the embodiment of FIG. 3A. In the present embodiment, it is assumed that four transmitters 100, 100', 100" and 100"' are about to transmit their own ID patterns IDP, IDP', IDP" and IDP"'. Now, the transmitters 100, 100', 100" and 100"' can respectively partition the ID patterns IDP, IDP', IDP" and IDP"' into the corresponding ID segments according to the method described in the aforementioned embodiment, and details thereof are not repeated. Then, the resource allocation units (not shown) included in the transmitters 100, 100', 100" and 100"' can also allocate the two corresponding ID segments to the two corresponding communication resource blocks, and merge to generate a transmitted signal having information of the ID pattern.

Taking the transmitter 100 as an example, the resource allocation unit 130 allocates the communication resource block CS1 on the k^{th} subcarrier to transmit the ID segment S1, and allocates the communication resource block CS2 on the (k+Q)^{th} subcarrier to transmit the ID segment S2. The adjacent communication recourse blocks CS1 and CS2 can be simultaneously spaced by the predetermined number (M) of symbols and the predetermined number (Q) of sub carriers. Taking the transmitter 100' as an example, the resource allocation unit thereof (not shown) allocates the communication resource block CS1' on the k^{th} subcarrier to transmit the ID segment S1', and allocates the communication resource block CS2' on the (k+Q)^{th} subcarrier to transmit the ID segment S2'. The communication recourse blocks CS1' and CS2' can be simultaneously spaced by the predetermined number (M) of symbols and the predetermined number (Q) of subcarriers. Taking the transmitter 100" as an example, the resource allocation unit thereof (not shown) allocates the communication resource block CS1" on the k^{th} subcarrier to transmit the ID segment S1", and allocates the communication resource block CS2" on the (k+Q)^{th} subcarrier to transmit the ID segment S2". The communication recourse blocks CS1" and CS2" can be simultaneously spaced by the predetermined number (M) of symbols and the predetermined number (Q) of subcarriers. Taking the transmitter 100"' as an example, the resource allocation unit thereof (not shown) allocates the communication resource block CS1"' on the k^{th} subcarrier to transmit the ID segment S1"', and allocates the communication resource block CS2"' on the (k+Q)^{th} subcarrier to transmit the ID segment S2"'. The communication recourse blocks CS1"' and CS2"' can be simultaneously spaced by the predetermined number (M) of symbols and the predetermined number (Q) of subcarriers. In other embodiments, before the transmitters 100, 100', 100" and 100"' individually perform the resource allocation operation, the transmitters 100, 100', 100" and 100"' can perform a synchronization operation to ensure that the individually allocated communication resource blocks are not mutually interfered.

After the transmitters 100, 100', 100" and 100"' individually finish the resource allocation, the corresponding ID segments can be transmitted through the allocated communication resource blocks. Therefore, regarding the k^{th} subcarrier, the ID segments carried by the k^{th} subcarrier at different time are shown as a resource configuration RC1; regarding the (k+Q)^{th} subcarrier, the ID segments carried by the (k+Q)^{th} subcarrier at different time are shown as a resource configuration RC2, though the disclosure is not limited thereto. When the transmitters 100, 100', 100" and 100"' allocate the communication resource blocks through configurations different to that shown in FIG. 3B, a resource configuration different to the resource configurations RC1 and RC2 is formed.

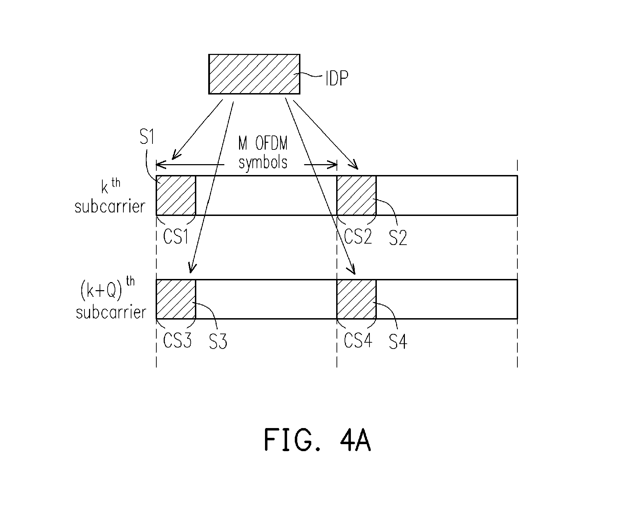

In other embodiments, the transmitters can also allocate communication resources as that shown in FIG. 4A-FIG. 4B according to the combination of the communication resource allocation methods shown in FIG. 3A-FIG. 3B and FIG. 2A-FIG. 2B, which are described in detail below.

FIG. 4A is a schematic diagram of communication resource allocation according to an embodiment of the disclosure. In the present embodiment, it is assumed that the ID pattern IDP is partitioned into four (i.e. S=4) ID segments S1-S4 by the resource allocation unit 130 of FIG. 1. The ID segments S1-S4 respectively include L/4 (it is assumed that L/4 is a positive integer) successive OFDM symbols on a single subcarrier in the frequency domain. The resource allocation unit 130 allocates the communication resource block CS1 on the k^{th} subcarrier to transmit the ID segment S1, and allocates the communication resource block CS2 on the k^{th} subcarrier to transmit the ID segment S2. Then, the resource allocation unit 130 allocates the communication resource block CS3 on the (k+Q)^{th} subcarrier to transmit the ID segment S3, and allocates the communication resource block CS4 on the (k+Q)^{th} subcarrier to transmit the ID segment S4.

Similar to the instructions of the embodiments of FIG. 2A-FIG. 2B and FIG. 3A-FIG. 3B, the communication resource blocks CS1 and CS2 and the communication resource blocks CS3 and CS4 are respectively spaced by the predetermined number (M) of symbols. The predetermined number (M) of symbols can also be set according to the Doppler frequency (f_{d}) and the useful symbol duration (T_{U}) related to the communication channel. Moreover, the communication resource blocks CS1 and CS3 and the communication resource blocks CS2 and CS4 are respectively spaced by the predetermined number (Q) of subcarriers. The predetermined number (Q) of subcarriers can also be set according to the useful symbol duration (T_{U}) and the maximum multi-path delay time (τₘₐₓ) related to the communication channel. Setting details of the predetermined number (M) of symbols and predetermined number (Q) of subcarriers may refer to related descriptions of the embodiments of FIG. 2A-FIG. 2B and FIG. 3A-FIG. 3B, which are not repeated.

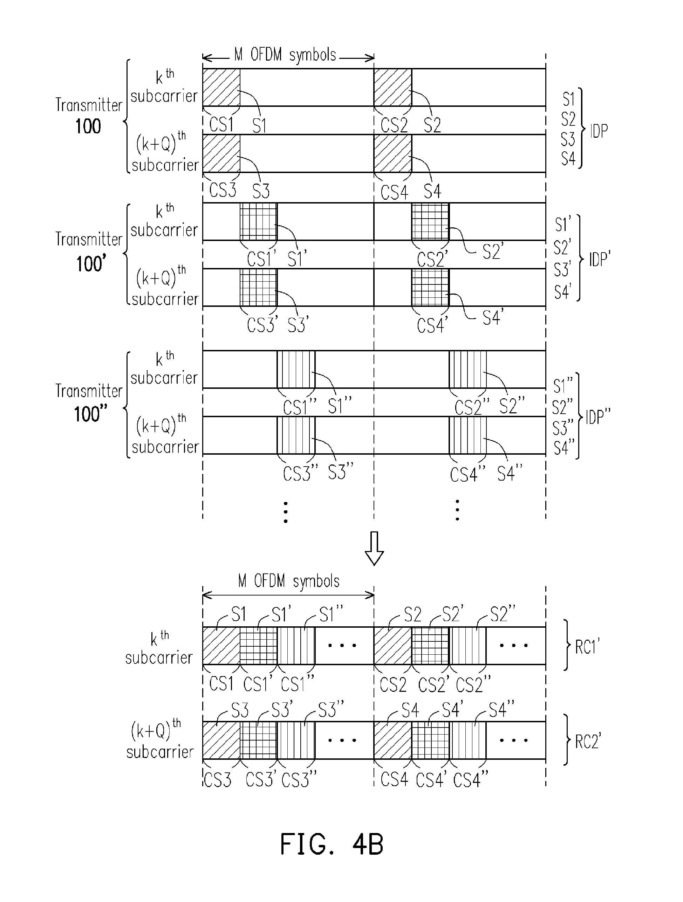

FIG. 4B is a schematic diagram of communication resource allocation according to the embodiment of FIG. 4A. In the present embodiment, it is assumed that three transmitters 100, 100' and 100" are about to transmit their own ID patterns IDP, IDP' and IDP". Now, the transmitters 100, 100' and 100" can respectively partition the ID patterns IDP, IDP' and IDP" into the corresponding ID segments according to the method described in the embodiments of FIG. 1 and FIG. 4A. Then, the resource allocation units (not shown) included in the transmitters 100, 100' and 100" can also allocate the four corresponding ID segments to the four corresponding communication resource blocks, and merge to generate a transmitted signal having information of the ID pattern.

Taking the transmitter 100' as an example, the resource allocation unit thereof (not shown) allocates the communication resource blocks CS1' and CS2' on the k^{th} subcarrier to respectively transmit the ID segments S1' and S2', and allocates the communication resource block CS3' and CS4' on the (k+Q)^{th} subcarrier to respectively transmit the ID segments S3' and S4'. Taking the transmitter 100" as an example, the resource allocation unit thereof (not shown) allocates the communication resource blocks CS1" and CS2" on the k^{th} subcarrier to respectively transmit the ID segments S1" and S2", and allocates the communication resource block CS3" and CS4" on the (k+Q)^{th} subcarrier to respectively transmit the ID segments S3" and S4". In other embodiments, before the transmitters 100, 100' and 100" individually perform the resource allocation operation, the transmitters 100, 100' and 100" can perform a synchronization operation to ensure that the individually allocated communication resource blocks are not mutually interfered.

After the transmitters 100, 100' and 100" individually finish the resource allocation, the corresponding ID segments can be transmitted through the allocated communication resource blocks. Therefore, regarding the k^{th} subcarrier, the ID segments carried by the k^{th} subcarrier at different time are shown as a resource configuration RC1'; and regarding the (k+Q)^{th} subcarrier, the ID segments carried by the (k+Q)^{th} subcarrier at different time are shown as a resource configuration RC2', though the disclosure is not limited thereto. When the transmitters 100, 100' and 100" allocate the communication resource blocks through configurations different to that shown in FIG. 4B, a resource configuration different to the resource configurations RC1' and RC2' is formed.

It should be noticed that each of the components included in the transmitter 100 can be implemented by an application specific integrated circuit (ASIC), a field programmable gate array (FPGA), an IC circuit and chip of any type, a finite state machine (FSM), at least one processor load the software programs to respectively execute the aforementioned functions of the components, etc. Though the disclosure is not limited thereto.

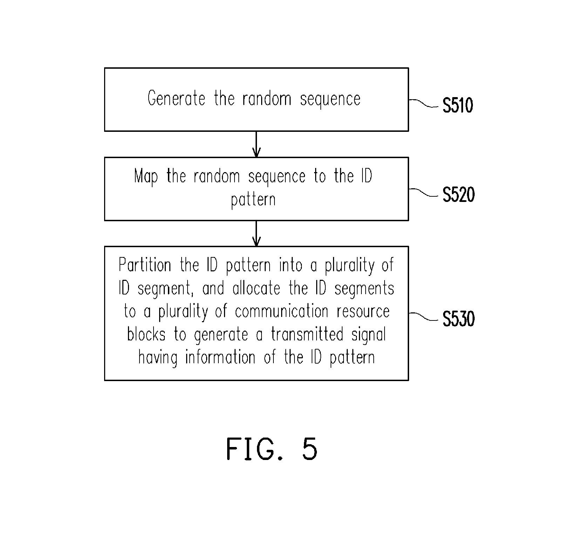

FIG. 5 is a flowchart illustrating an ID pattern transmission method according to an embodiment of the disclosure. The ID pattern transmission method of the present embodiment is adapted to the transmitter 100 of FIG. 1, though the disclosure is not limited thereto, and the ID pattern transmission method of the disclosure is described below with reference of all the components of the transmitter 100. In step S510, the random sequence generator 110 generates a random sequence DS. In step S520, the mapper 120 maps the random sequence DS to an ID pattern IDP. In step S530, the resource allocation unit 130 partitions the ID pattern IDP into a plurality of ID segments (for example, the ID segments S1 and S2 in FIG. 2A), and allocates the ID segments to a plurality of communication resource blocks (for example, the communication resource blocks CS1 and CS2 in FIG. 2A) to generate a transmitted signal having information of the ID pattern IDP. Then, the resource allocation unit 130 performs, for example, an inverse fast Fourier transform (IFFT) conversion (not shown) on the ID segments S1 and S2 according to the resource allocation method of FIG. 2A to transform the frequency domain OFDM symbols (i.e. the OFDM symbols included in the ID segments S1 and S2) into corresponding time domain signals, and transmits the time domain signals having information of the ID pattern to a communication channel through, for example, an antenna (not shown) for device-to-device communication. Details of the aforementioned steps can refer to related descriptions of the aforementioned embodiments, which are not repeated.

According to the aforementioned all kinds of communication resource allocation methods, a receiver in another communication device can perform ID pattern detection according to the communication resource allocation method adopted in the current system to find whether there is an empty resource used for transmitting the ID pattern, which is described in detail below.

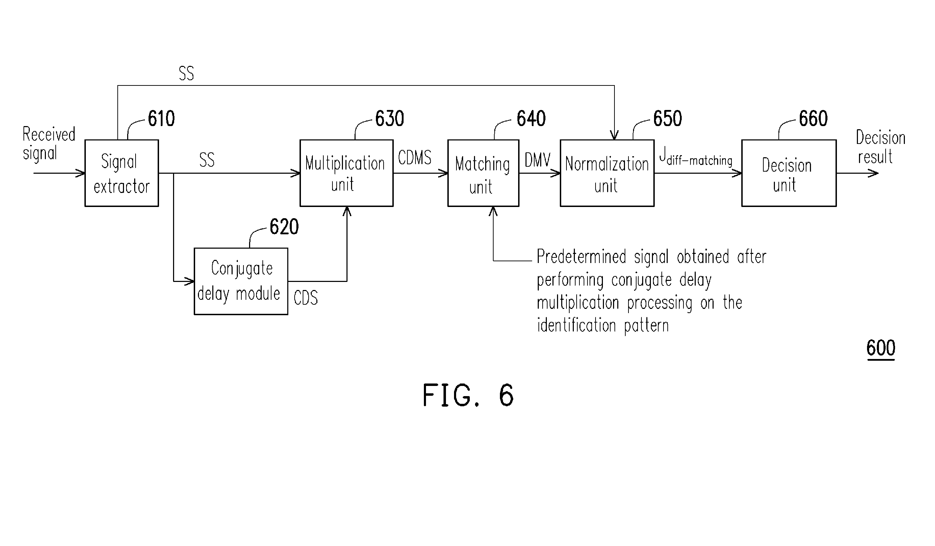

FIG. 6 is a schematic diagram of a receiver according to an embodiment of the disclosure. In the present embodiment, the receiver 600 includes a signal extractor 610, a conjugate delay module 620, a multiplication unit 630, a matching unit 640, a normalization unit 650 and a decision unit 660. The signal extractor 610 extracts a plurality of communication resource blocks corresponding to a plurality of ID segments of the ID pattern from a received signal having information of the ID pattern, so as to generate an ID pattern received signal SS, where each of the communication resource blocks is spaced from another adjacent communication resource block by a predetermined number of symbols and/or a predetermined number of subcarriers. In an embodiment, the time domain received signal having information of the ID pattern can be sequentially received and processed by, for example, an antenna (not shown) and a fast Fourier transformer (not shown) to generate a frequency domain received signal having information of the ID pattern, and the frequency domain received signal is then transmitted to the signal extractor 610 to perform the aforementioned signal extraction operation, though the disclosure is not limited thereto. The communication resource blocks are, for example, one kind of communication resource blocks shown in FIG. 2A to FIG. 4B. When the communication resource blocks are allocated according to the aforementioned embodiments shown in FIG. 2A to FIG. 4B, the transmitter can notify the communication resource allocation rule to the receiver 600 through a base station or other device in the communication system, such that the receiver 600 can extract the communication resource blocks corresponding to the ID segments of the ID pattern of the transmitter according to the communication resource allocation rule.

Taking the embodiment of FIG. 2A as an example, when each of the transmitters in the communication system allocates the two ID segments to the two communication resource blocks according to the communication resource allocation rule shown in FIG. 2A, the receiver 600 can extracts the two communication resource blocks according to such communication resource allocation rule. Namely, the receiver 600 knows that the communication resource blocks CS1 and CS2 may be used by a certain transmitter to transmit the ID segments thereof. In order to determine whether the communication resource blocks CS1 and CS2 carry information of the ID pattern of the certain transmitter, the receiver 600 can extract the two ID segments (for example, a plurality of OFDM symbols on a single subcarrier) carried by the communication resource blocks CS1 and CS2. Since the receiver 600 extracts the two corresponding ID segments according to the communication resource allocation rule shown in the embodiment of FIG. 2A, and the corresponding number of OFDM symbols is, for example, L, the ID pattern received signal SS of the two ID segments can be individually represented by *Rₗ*[*k*], where *l* is a symbol index value, which is an integer between 1 and L, and *k* is a subcarrier index value. In other words, *Rₗ*[*k*] is the ID pattern received signal SS on the *l*^{th} symbol and the k^{th} subcarrier.

Since the ID pattern received signal SS (*Rₗ*[*k*]) may or may not carry the ID segments of the certain transmitter, in response to such two cases, *Rₗ*[*k*] may have following expressions. First, when the ID pattern received signal SS does not carry the ID segments of the certain transmitter, *Rₗ*[*k*] is *Wₗ*[*k*], where *Wₗ*[*k*] is, for example, frequency domain additive white Gaussian noise (AWGN) on the *l*^{th} symbol and the k^{th} subcarrier in the communication channel, and when the ID pattern received signal SS carries the ID segments of the certain transmitter, *Rₗ*[*k*] is *Xₗ*[*k*] *Hₗ*[*k*]+ *Wₗ*[*k*], where *Xₗ*[*k*] is, for example, the ID pattern on the *l*^{th} symbol and the k^{th} subcarrier, and *Hₗ*[*k*] is, for example, an equivalent channel frequency response on the *l*^{th} symbol and the k^{th} subcarrier in the communication channel.

The conjugate delay module 620 is coupled to the signal extractor 610, and individually delays the ID pattern received signal SS for a symbol time, and performs a complex conjugate processing on the delayed ID pattern received signal SS to generate a conjugated delayed received signal CDS of the ID pattern. Therefore, the conjugated delayed received signal CDS of the ID pattern can be represented by, for example, ${R}_{l - 1}^{*} \left[k\right] ,$ where ( . )* is a complex conjugate operation.

The multiplication unit 630 is coupled to the signal extractor 610 and the conjugate delay module 620, and multiplies the ID pattern received signal SS with the conjugated delayed received signal CDS of the ID pattern to generate a conjugated delayed multiplied received signal CDMS of the ID pattern. The conjugated delayed multiplied received signal CDMS of the ID pattern can be represented by, for example, ${R}_{l} \left[k\right] ⋅ {R}_{l - 1}^{*} \left[k\right] .$ Corresponding to the aforementioned two cases expressions of *Rₗ*[*k*], the conjugated delayed multiplied received signal CDMS of the ID pattern can be represented as, for example, ${R}_{l} \left[k\right] ⋅ {R}_{l - 1}^{*} \left[k\right] = { \begin{matrix}{W}_{l} \left[k\right] ⁢ {W}_{l - 1}^{*} \left[k\right] \\ {X}_{l} \left[k\right] ⁢ {H}_{l} \left[k\right] ⁢ {X}_{l - 1}^{*} \left[k\right] ⁢ {H}_{l - 1}^{*} \left[k\right] + {X}_{l} \left[k\right] ⁢ {H}_{l} \left[k\right] ⁢ {W}_{l - 1}^{*} \left[k\right] ⁢ {X}_{l - 1}^{*} \left[k\right] + {H}_{l - 1}^{*} \left[k\right] ⁢ {W}_{l} \left[k\right] + {W}_{l} \left[k\right] ⋅ {W}_{l - 1}^{*} \left[k\right]\end{matrix}$

In detail, the receiver may have a carrier frequency offset (CFO) effect due to mismatch between oscillators in the receiver and the transmitter. The CFO effect results in a factor, for example, *e*^{*j*2π*lNT*,Δ*f*} in *Rₗ*[*k*], where *N* is a sample number of a useful symbol (N is a positive integer), *Tₛ* is a sample duration (with a unit of second), and Δ*f* is a CFO value (with a unit of Hz). For example, when the ID pattern received signal SS carries the ID segments of a certain transmitter, *Rₗ*[*k*] can be represented as *Rₗ*[*k*]=*Xₗ*[*k*]·*Hₗ*[*k*]*e*^{*j*2π*lNT,*Δ*f*} + *Wₗ*[*k*]. Through the operation of the multiplication unit 630, the parameter *l* in the factor, for example, e^{*j*2π*lNT,*Δ*f*} can be eliminated in the conjugated delayed multiplied received signal CDMS of the ID pattern (i.e. ${R}_{l} \left[k\right] ⋅ {R}_{l - 1}^{*} \left[k\right]$), so as to eliminate the influence of the CEO effect on ${R}_{l} \left[k\right] ⋅ {R}_{l - 1}^{*} \left[k\right] .$ In this way, the accuracy of the detection operation performed according to ${R}_{l} \left[k\right] ⋅ {R}_{l - 1}^{*} \left[k\right]$ could be improved in principle due to that it is not influenced by the CFO effect. The conjugated delayed multiplied received signal CDMS of the ID pattern results in a fact that the detection operation performed according to ${R}_{l} \left[k\right] ⋅ {R}_{l - 1}^{*} \left[k\right]$ have robustness for the CFO effect.

The matching unit 640 is coupled to the multiplication unit 630 and a predetermined signal, where the predetermined signal is obtained after the corresponding ID pattern is processed with a conjugate delay multiplication processing. The matching unit 640 performs a matching processing on the conjugated delayed multiplied received signal CDMS of the ID pattern and the predetermined signal, so as to generate a differential matching value DMV. The predetermined signal is, for example, ${X}_{l} \left[k\right] ⁢ {X}_{l - 1}^{*} \left[k\right] .$ The differential matching value DMV is, for example, $\frac{1}{L} ⁢ \left|{\sum }_{i = 1}^{S}{\sum }_{\left(l⁢k\right) ∈ i} \left\{{R}_{l}\left[k\right]⋅{R}_{l - 1}^{*}\left[k\right]\right\}⋅{\left\{{X}_{l}\left[k\right]⋅{X}_{l - 1}^{*}\left[k\right]\right\}}^{*}\right| ,$ where *i* is an index value of the communication resource blocks. Namely, when the matching unit 640 calculates the differential matching value DMV, the symbols included in a plurality of the ID segments are all taken into consideration.

The normalization unit 650 is coupled to the matching unit 640 and the signal extractor 610, and performs a normalization processing on the differential matching value DMV according to an average power of the ID pattern received signal SS to generate a normalized differential matching value (which is represented as *J_{diff-matching}*), and the *J_{diff-matching}* is, for example, ${J}_{diff - matching} = \frac{\frac{1}{L} ⁢ \left|{\sum }_{i = 1}^{S} {\sum }_{\left(l⁢k\right) ∈ i} \left\{{R}_{l}\left[k\right]⋅{R}_{l - 1}^{*}\left[k\right]\right\} ⋅ {\left\{{X}_{l}\left[k\right]⋅{X}_{l - 1}^{*}\left[k\right]\right\}}^{*}\right|}{\frac{1}{L} {\sum }_{l = 1}^{L} {\left|{R}_{l}\left[k\right]\right|}^{2}}$ where $\frac{1}{L} {\sum }_{l = 1}^{L} {\left|{R}_{l}\left[k\right]\right|}^{2}$ is, for example, the average power of the ID pattern received signal SS, and *i* is an index value of the communication resource blocks. Taking the embodiment of FIG. 2A as an example, the communication resource blocks CS1 and CS2 in FIG. 2A respectively corresponding to cases of i=1 and i=2, and taking the embodiment of FIG. 4A as an example, the communication resource blocks CS1 ∼ CS4 in FIG. 4A respectively corresponding to cases of i=1∼4, though the disclosure is not limited thereto.

The decision unit 660 is coupled to the normalization unit 650, and determines whether the normalized differential matching value (*J_{diff-matching}*) is greater than a predetermined threshold value. If yes, the decision unit 660 outputs a decision result to determine that the ID pattern is detected, and if not, the decision unit 660 outputs the decision result to determine that the ID pattern is not detected. The predetermined threshold value can be any real number (for example, a positive real number smaller than 0.5) according to a design requirement.

In other embodiments, if the transmitter does not partition the ID pattern thereof (i.e. S=1) during transmission, the aforementioned normalized differential matching value *J_{diff-matching}* is correspondingly represented as, for example, ${J}_{diff - matching} = \frac{\left|\frac{1}{L}{\sum }_{l = 1}^{L} \left\{{R}_{l}\left[k\right]⋅{R}_{l - 1}^{*}\left[k\right]\right\} ⋅ {\left\{{X}_{l}\left[k\right]⋅{X}_{l - 1}^{*}\left[k\right]\right\}}^{*}\right|}{\frac{1}{L} {\sum }_{l = 1}^{L} {\left|{R}_{l}\left[k\right]\right|}^{2}}$

Moreover, the aforementioned normalized differential matching value *J_{diff-matching}* may be also correspondingly represented as, for another example, ${J}_{diff - matching} = \frac{\frac{1}{L} {\sum }_{i = 1}^{S} \left| {\sum }_{\left(l⁢k\right) ∈ i} \left\{{R}_{l}\left[k\right]⋅{R}_{l - 1}^{*}\left[k\right]\right\} ⋅ {\left\{{X}_{l}\left[k\right]⋅{X}_{l - 1}^{*}\left[k\right]\right\}}^{*}\right|}{\frac{1}{L} {\sum }_{l = 1}^{L} {\left|{R}_{l}\left[k\right]\right|}^{2}} ,$
where $\frac{1}{L} ⁢ \left|{\sum }_{i = 1}^{S}{\sum }_{\left(l⁢k\right) ∈ i} \left\{{R}_{l}\left[k\right]⋅{R}_{l - 1}^{*}\left[k\right]\right\}⋅{\left\{{X}_{l}\left[k\right]⋅{X}_{l - 1}^{*}\left[k\right]\right\}}^{*}\right|$ is, for example, the differential matching value.

It should be noticed that each of components included in the receiver 600 can be implemented by an application specific integrated circuit (ASIC), a field programmable gate array (FPGA), an IC circuit and chip of any type, a finite state machine (FSM), at least one processor load the software programs to respectively execute the aforementioned functions of the components, etc. Though the disclosure is not limited thereto.

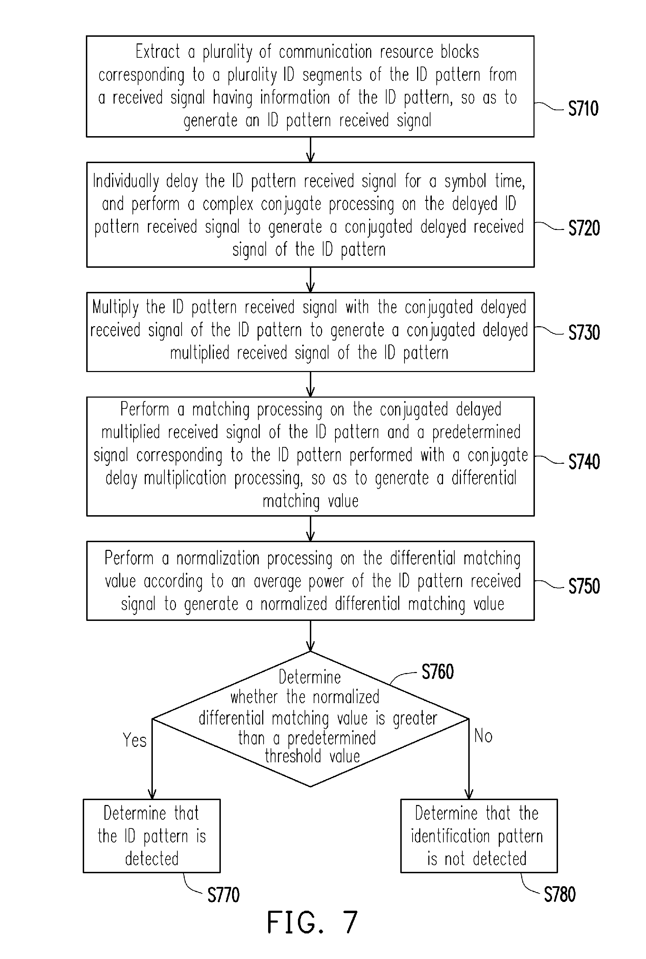

FIG. 7 is a flowchart illustrating an ID pattern detection method according to an embodiment of the disclosure. The ID pattern detection method of the present embodiment is adapted to the receiver 600 of FIG. 6, though implementation of the disclosure is not limited thereto. The ID pattern detection method of the disclosure is described below with reference of all the components in the receiver 600. In step S710, the signal extractor 610 extracts a plurality of communication resource blocks corresponding to a plurality of ID segments of the ID pattern from a received signal having information of the ID pattern, so as to generate an ID pattern received signal SS. In step S720, the conjugate delay module 620 individually delays the ID pattern received signal SS for a symbol time, and performs a complex conjugate processing on the delayed ID pattern received signal SS to generate a conjugated delayed received signal CDS of the ID pattern. In step S730, the multiplication unit 630 multiplies the ID pattern received signal SS with the conjugated delayed received signal CDS of the ID pattern to generate a conjugated delayed multiplied received signal CDMS of the ID pattern. In step S740, the matching unit performs a matching processing on the conjugated delayed multiplied received signal CDMS of the ID pattern and a predetermined signal corresponding to the ID pattern IDP performed with a conjugate delay multiplication processing, so as to generate a differential matching value DMV. In step S750, the normalization unit 650 performs a normalization processing on the differential matching value DMV according to an average power of the ID pattern received signal SS to generate a normalized differential matching value. In step S760, the decision unit 660 determines whether the normalized differential matching value (*J_{diff-matching}*) is greater than a predetermined threshold value. If yes, the decision unit 660 outputs a decision result to determine that the ID pattern is detected (step S770), and if not, the decision unit 660 outputs the decision result to determine that the ID pattern is not detected (step S780). Details of the aforementioned steps can refer to related descriptions of the embodiment of FIG. 6, which are not repeated.

In summary, according to the transmitter and the ID pattern transmission method of the disclosure, after the ID pattern is partitioned into a plurality of ID segments, the communication resource blocks used for transmitting the ID segments are suitably allocated to obtain the time diversity gain and/or frequency diversity gain. In this way, when the receiver detects whether the communication resource blocks carry the ID segments, the probability of detection error in principle could be decreased. According to the aforementioned communication resource allocation rule, the receiver and the ID pattern detection method thereof can extract a plurality of communication resource blocks corresponding to a plurality of ID segments of the ID pattern from a frequency domain received signal having information of the ID pattern, so as to generate the ID pattern received signal, and in principle could eliminate the influence of the CFO effect through the proposed signal processing method shown in the embodiment of FIG. 6.

## Claims

1. A transmitter (100, 100', 100", 100"'), adapted to transmit an identification pattern (IDP, IDP', IDP", IDP"') used for device-to-device communication, the transmitter (100, 100', 100", 100"') comprising:
a random sequence generator (110), generating a random sequence (DS);
a mapper (120), coupled to the random sequence generator (110), and mapping the random sequence (DS) to the identification pattern (IDP, IDP', IDP", IDP"'), wherein the identification pattern (IDP, IDP', IDP", IDP"') comprises a plurality of orthogonal frequency division multiplexing symbols on a plurality of subcarriers; and
a resource allocation unit (130), coupled to the mapper (120), and partitioning the identification pattern (IDP, IDP', IDP", IDP"') into a plurality of identification segments (S1, S2, S3, S4, S1', S2', S3', S4', S1", S2", S3", S4", S1"', S2"'), and allocating the identification segments (S1, S2, S3, S4, S1', S2', S3', S4', S1", S2", S3", S4", S1"', S2"') to a plurality of communication resource blocks (CS1, CS2, CS1', CS2', CS1", CS2", CS1"', CS2"') to generate a transmitted signal having information of the identification pattern (IDP, IDP', IDP", IDP"'), wherein each of the communication resource blocks (CS1, CS2, CS1', CS2', CS1", CS2", CS1"', CS2"') is spaced from another adjacent communication resource block (CS1, CS2, CS1', CS2', CS1", CS2", CS1"', CS2"') by a predetermined number of symbols and/or a predetermined number of subcarriers.

2. The transmitter as claimed in claim 1, wherein a number of the orthogonal frequency division multiplexing symbols in each of the identification segments (S1, S2, S3, S4, S1', S2', S3', S4', S1", S2", S3", S4", S1"', S2"') is a positive integer not less than 2.

3. The transmitter as claimed in claim 1, wherein the predetermined number of symbols relates to a Doppler frequency and a useful symbol duration.

4. The transmitter as claimed in claim 3, wherein a relationship between the predetermined number of symbols, the Doppler frequency and the useful symbol duration satisfies: $M > 0.5 / \left({f}_{d}\times {T}_{U}\right) ,$
wherein M is the predetermined number of symbols, f_{d} is the Doppler frequency, and T_{U} is the useful symbol duration.

5. The transmitter as claimed in claim 1, wherein the predetermined number of subcarriers relates to a maximum multi-path delay time and a useful symbol duration.

6. The transmitter as claimed in claim 5, wherein a relationship between the predetermined number of subcarriers, the useful symbol duration and the maximum multi-path delay time satisfies: $Q > {T}_{U} / {τ}_{max} ,$
wherein Q is the predetermined number of subcarriers, T_{U} is the useful symbol duration, and τₘₐₓ is the maximum multi-path delay time.

7. An identification pattern transmission method, adapted to a transmitter (100) for device-to-device communication, the identification pattern transmission method comprising:
generating a random sequence (DS);
mapping the random sequence (DS) to an identification pattern (IDP, IDP', IDP", IDP"'), wherein the identification pattern (IDP, IDP', IDP", IDP"') comprises a plurality of orthogonal frequency division multiplexing symbols on a plurality of subcarriers; and
partitioning the identification pattern (IDP, IDP', IDP", IDP"') into a plurality of identification segments (S1, S2, S3, S4, S1' S2', S3', S4', S1", S2", S3", S4", S1"', S2"'), and allocating the identification segments (S1, S2, S3, S4, S1', S2', S3', S4', S1", S2", S3", S4", S1"', S2"') to a plurality of communication resource blocks (CS1, CS2, CS1', CS2', CS1", CS2", CS1"', CS2"') to generate a transmitted signal having information of the identification pattern (IDP, IDP', IDP", IDP"'), wherein each of the communication resource blocks (CS1, CS2, CS1', CS2', CS1", CS2", CS1"', CS2"') is spaced from another adjacent communication resource block (CS1, CS2, CS1', CS2', CS1", CS2", CS1"', CS2"') by a predetermined number of symbols and/or a predetermined number of subcarriers.

8. The identification pattern transmission method as claimed in claim 7, wherein a number of the orthogonal frequency division multiplexing symbols in each of the identification segments (S1, S2, S3, S4, S1', S2', S3', S4', S1", S2", S3", S4", S1"', S2"') is a positive integer not less than 2.

9. The identification pattern transmission method as claimed in claim 7, wherein the predetermined number of symbols relates to a Doppler frequency and a useful symbol duration.

10. The identification pattern transmission method as claimed in claim 9, wherein a relationship between the predetermined number of symbols, the Doppler frequency and the useful symbol duration satisfies: $M > 0.5 / \left({f}_{d}\times {T}_{U}\right) ,$
wherein M is the predetermined number of symbols, f_{d} is the Doppler frequency, and T_{U} is the useful symbol duration.

11. The identification pattern transmission method as claimed in claim 7, wherein the predetermined number of subcarriers relates to a maximum multi-path delay time and a useful symbol duration.

12. The identification pattern transmission method as claimed in claim 11, wherein a relationship between the predetermined number of subcarriers, the useful symbol duration and the maximum multi-path delay time satisfies: $Q > {T}_{U} / {τ}_{max} ,$
Where Q is the predetermined number of subcarriers, T_{U} is the useful symbol duration, and τₘₐₓ is the maximum multi-path delay time.

13. A receiver (600), adapted to detect an identification pattern (IDP, IDP', IDP", IDP"') used for device-to-device communication, the receiver (600) comprising:
a signal extractor (610), extracting a plurality of communication resource blocks (CS1, CS2, CS1', CS2', CS1", CS2", CS1"', CS2"') corresponding to a plurality of identification segments (S1, S2, S3, S4, S1', S2', S3', S4', S1", S2", S3", S4", S1"', S2"') of the identification pattern (IDP, IDP', IDP", IDP"') from a received signal having information of the identification pattern (IDP, IDP', IDP", IDP"'), so as to generate an identification pattern received signal (SS), wherein the identification pattern received signal (SS) comprises a plurality of orthogonal frequency division multiplexing symbols on a plurality of subcarriers;
a conjugate delay module (620), coupled to the signal extractor (610), and individually delaying the identification pattern received signal (SS) for a symbol time, and performing a complex conjugate processing on the delayed identification pattern received signal (SS) to generate a conjugated delayed received signal (CDS) of the identification pattern (IDP, IDP', IDP", IDP"');
a multiplication unit (630), coupled to the signal extractor (610) and the conjugate delay module (620), and multiplying the identification pattern received signal (SS) with the conjugated delayed received signal (CDS) of the identification pattern (IDP, IDP', IDP", IDP"') to generate a conjugated delayed multiplied received signal (CDMS) of the identification pattern (IDP, IDP', IDP", IDP"');
a matching unit (640), coupled to the multiplication unit (630) and a predetermined signal, wherein the predetermined signal is obtained after performing a conjugate delay multiplication processing on the identification pattern (IDP, IDP', IDP", IDP"'), and the matching unit (640) performs a matching processing on the conjugated delayed multiplied received signal (CDMS) of the identification pattern (IDP, IDP', IDP", IDP"') and the predetermined signal, so as to generate a differential matching value (DMV);
a normalization unit (650), coupled to the matching unit (640) and the signal extractor (610), and performing a normalization processing on the differential matching value (DMV) according to an average power of the identification pattern received signal (SS) to generate a normalized differential matching value (*J_{diff-matching}*); and
a decision unit (660), coupled to the normalization unit (650), and determining whether the normalized differential matching value (*J_{diff-matching}*) is greater than a predetermined threshold value;
if yes, outputting a decision result by the decision unit (660) to determine that the identification pattern (IDP, IDP', IDP", IDP"') is detected; and
if not, outputting the decision result by the decision unit (660) to determine that the identification pattern (IDP, IDP', IDP", IDP"') is not detected.

14. The receiver as claimed in claim 13, wherein each of the communication resource blocks (CS1, CS2, CS1', CS2', CS1", CS2", CS1"', CS2"') is spaced from another adjacent communication resource block (CS1, CS2, CS1', CS2', CS1", CS2", CS1"', CS2"') by a predetermined number of symbols and/or a predetermined number of subcarriers.

15. The receiver as claimed in claim 14, wherein the differential matching value (DMV) is represented as: $\frac{1}{L} ⁢ \left| {\sum }_{i = 1}^{S} {\sum }_{\left(l⁢k\right) ∈ i} \left\{{R}_{l}\left[k\right]⋅{R}_{l - 1}^{*}\left[k\right]\right\} ⋅ {\left\{{X}_{l}\left[k\right]⋅{X}_{l - 1}^{*}\left[k\right]\right\}}^{*}\right| ,$
wherein L is a number of symbols of the identification pattern received signal (SS), *l* is a symbol index value, *k* is a subcarrier index value, *Rₗ*[*k*] is the identification pattern received signal (SS) on the *l*^{th} symbol and the *k*^{th} subcarrier, S is a number of the identification segments (S1, S2, S3, S4, S1', S2', S3', S4', S1", S2", S3", S4", S1"', S2"'), *Xₗ*[*k*] is the identification pattern (IDP, IDP', IDP", IDP"') on the *l*^{th} symbol and the *k*^{th} subcarrier, ( . )* is a complex conjugate operation, and *i* is an index value of the communication resource blocks (CS1, CS2, CS1', CS2', CS1", CS2", CS1"', CS2"').

16. The receiver as claimed in claim 14, wherein the differential matching value (DMV) is represented as: $\frac{1}{L} ⁢ \left| {\sum }_{i = 1}^{S} {\sum }_{\left(l⁢k\right) ∈ i} \left\{{R}_{l}\left[k\right]⋅{R}_{l - 1}^{*}\left[k\right]\right\} ⋅ {\left\{{X}_{l}\left[k\right]⋅{X}_{l - 1}^{*}\left[k\right]\right\}}^{*}\right| ,$
wherein L is a number of symbols of the identification pattern received signal (SS), *l* is a symbol index value, *k* is a subcarrier index value, *Rₗ*[*k*] is the identification pattern received signal (SS) on the *l*^{th} symbol and the *k*^{th} subcarrier, S is a number of the identification segments (S1, S2, S3, S4, S1', S2', S3', S4', S1", S2", S3", S4", S1"', S2"'), *Xₗ*[*k*] is the identification pattern (IDP, IDP', IDP", IDP"') on the *l*^{th} symbol and the *k*^{th} subcarrier, ( . )* is a complex conjugate operation, and *i* is an index value of the communication resource blocks (CS1, CS2, CS1', CS2', CS1", CS2", CS1"', CS2"').

17. The receiver as claimed in claim 13, wherein when the number of the identification segments (S1, S2, S3, S4, S1', S2', S3', S4', S1", S2", S3", S4", S1"', S2"') is equal to 1, the differential matching value (DMV) is represented as: $\left|\frac{1}{L} {\sum }_{l = 1}^{L}\left\{{R}_{l}\left[k\right]⋅{R}_{l - 1}^{*}\left[k\right]\right\} ⋅ {\left\{{X}_{l}\left[k\right]⋅{X}_{l - 1}^{*}\left[k\right]\right\}}^{*}\right| ,$
wherein L is a number of symbols of the identification pattern received signal (SS), *l* is a symbol index value, *k* is a subcarrier index value, *Rₗ*[*k*] is the identification pattern received signal (SS) on the *l*^{th} symbol and the *k*^{th} subcarrier, *Xₗ*[*k*] is the identification pattern (IDP, IDP', IDP", IDP"') on the *l*^{th} symbol and the *k*^{th} subcarrier, and ( . )* is a complex conjugate operation.

18. An identification pattern detection method, adapted to a receiver (600) for device-to-device communication, the identification pattern detection method comprising:
extracting a plurality of communication resource blocks (CS1, CS2, CS1', CS2', CS1", CS2", CS1"', CS2"') corresponding to a plurality of identification segments (S1, S2, S3, S4, S1', S2', S3', S4', S1", S2", S3", S4", S1"', S2"') of an identification pattern (IDP, IDP', IDP", IDP"') from a received signal having information of the identification pattern (IDP, IDP', IDP", IDP"'), so as to generate an identification pattern received signal (SS), wherein the identification pattern received signal (SS) comprises a plurality of orthogonal frequency division multiplexing symbols on a plurality of subcarriers;
individually delaying the identification pattern received signal (SS) for a symbol time, and performing a complex conjugate processing on the delayed identification pattern received signal (SS) to generate a conjugated delayed received signal (CDS) of the identification pattern (IDP, IDP', IDP", IDP"');
multiplying the identification pattern received signal (SS) with the conjugated delayed received signal (CDS) of the identification pattern (IDP, IDP', IDP", IDP"') to generate a conjugated delayed multiplied received signal (CDMS) of the identification pattern (IDP, IDP', IDP", IDP"');
performing a matching processing on the conjugated delayed multiplied received signal (CDMS) of the identification pattern (IDP, IDP', IDP", IDP"') and a predetermined signal, so as to generate a differential matching value (DMV), wherein the predetermined signal is obtained after performing a conjugate delay multiplication processing on the identification pattern (IDP, IDP', IDP", IDP"');
performing a normalization processing on the differential matching value (DMV) according to an average power of the identification pattern received signal (SS) to generate a normalized differential matching value (*J_{diff-matching}*); and
determining whether the normalized differential matching value (*J_{diff-matching}*) is greater than a predetermined threshold value;
if yes, outputting a decision result to determine that the identification pattern (IDP, IDP', IDP", IDP"') is detected; and
if not, outputting the decision result to determine that the identification pattern (IDP, IDP', IDP", IDP"') is not detected.

19. The identification pattern detection method as claimed in claim 18, wherein each of the communication resource blocks (CS1, CS2, CS1', CS2', CS1", CS2", CS1"', CS2"') is spaced from another adjacent communication resource block (CS1, CS2, CS1', CS2', CS1", CS2", CS1"', CS2"') by a predetermined number of symbols and/or a predetermined number of subcarriers.

20. The identification pattern detection method as claimed in claim 19, wherein the differential matching value (DMV) is represented as: $\frac{1}{L} ⁢ \left| {\sum }_{i = 1}^{S} {\sum }_{\left(l⁢k\right) ∈ i} \left\{{R}_{l}\left[k\right]⋅{R}_{l - 1}^{*}\left[k\right]\right\} ⋅ {\left\{{X}_{l}\left[k\right]⋅{X}_{l - 1}^{*}\left[k\right]\right\}}^{*}\right| ,$
wherein L is a number of symbols of the identification pattern received signal (SS), *l* is a symbol index value, *k* is a subcarrier index value, *Rₗ*[*k*] is the identification pattern received signal (SS) on the *l*^{th} symbol and the *k*^{th} subcarrier, S is a number of the identification segments (S1, S2, S3, S4, S1', S2', S3', S4', S1", S2", S3", S4", S1"', S2"'), *Xₗ*[*k*] is the identification pattern (IDP, IDP', IDP", IDP"') on the *l*^{th} symbol and the *k*^{th} subcarrier, ( . )* is a complex conjugate operation, and *i* is an index value of the communication resource blocks (CS1, CS2, CS1', CS2', CS1", CS2", CS1"', CS2"').

21. The identification pattern detection method as claimed in claim 19, wherein the differential matching value (DMV) is represented as: $\frac{1}{L} {\sum }_{i = 1}^{S} \left| {\sum }_{\left(l⁢k\right) ∈ i} \left\{{R}_{l}\left[k\right]⋅{R}_{l - 1}^{*}\left[k\right]\right\} ⋅ {\left\{{X}_{l}\left[k\right]⋅{X}_{l - 1}^{*}\left[k\right]\right\}}^{*}\right| ,$
wherein L is a number of symbols of the identification pattern received signal (SS), *l* is a symbol index value, *k* is a subcarrier index value, *Rₗ*[*k*] is the identification pattern received signal (SS) on the *l*^{th} symbol and the *k*^{th} subcarrier, S is a number of the identification segments (S1, S2, S3, S4, S1', S2', S3', S4', S1", S2", S3", S4", S1"', S2"'), *Xₗ*[*k*] is the identification pattern (IDP, IDP', IDP", IDP"') on the *l*^{th} symbol and the *k*^{th} subcarrier, ( . )* is a complex conjugate operation, and *i* is an index value of the communication resource blocks (CS1, CS2, CS1', CS2', CS1", CS2", CS1"', CS2"').

22. The identification pattern detection method as claimed in claim 18, wherein when the number of the identification segments (S1, S2, S3, S4, S1', S2', S3', S4', S1", S2", S3", S4", S1"', S2"') is equal to 1, the differential matching value (DMV) is represented as: $\left|\frac{1}{L} {\sum }_{l = 1}^{L}\left\{{R}_{l}\left[k\right]⋅{R}_{l - 1}^{*}\left[k\right]\right\} ⋅ {\left\{{X}_{l}\left[k\right]⋅{X}_{l - 1}^{*}\left[k\right]\right\}}^{*}\right| ,$
wherein L is a number of symbols of the identification pattern received signal (SS), *l* is a symbol index value, *k* is a subcarrier index value, *Rₗ*[*k*] is the identification pattern received signal (SS) on the *l*^{th} symbol and the *k*^{th} subcarrier, *Xₗ*[*k*] is the identification pattern (IDP, IDP', IDP", IDP"') on the *l*^{th} symbol and the *k*^{th} subcarrier, and ( . )* is a complex conjugate operation.
